# EUROPÄISCHE PATENTSCHRIFT

(11) **EP 2 513 511 B1**
(45) Veröffentlichungstag und Bekanntmachung des Hinweises auf die Patenterteilung: **06.01.2016**
(21) Anmeldenummer: 10773322.2
(22) Anmeldetag: 03.11.2010
(51) Int. Cl.: F16H 3/00, F16H 57/00, F16D 3/04, F16D 3/18, F16H 1/26, F16H 37/04

(54) **DOPPELKUPPLUNGSGETRIEBE EINES KRAFTFAHRZEUGS**
DOUBLE CLUTCH TRANSMISSION OF A MOTOR VEHICLE
BOÎTE DE VITESSE À DOUBLE EMBRAYAGE D'UN VÉHICULE AUTOMOBILE

(30) Priorität: 14.12.2009 DE 102009054595
(43) Veröffentlichungstag der Anmeldung: 24.10.2012
(73) Patentinhaber: ZF Friedrichshafen AG, 88038 Friedrichshafen (DE)
(72) Erfinder: RENNER, Stefan, 78351 Bodman-Ludwigshafen (DE); HUNOLD, Bernard, 88046 Friedrichshafen (DE); LÜBKE, Eckhardt, 88048 Friedrichshafen (DE)
(86) Internationale Anmeldenummer: PCT/EP2010/066689
(87) Internationale Veröffentlichungsnummer: WO 2011/072944

(56) Entgegenhaltungen:
- EP-A1- 2 128 495
- DE-A1- 2 447 582
- DE-A1- 2 817 106
- DE-A1- 19 633 279
- US-A1- 2008 184 846

## Beschreibung

Die Erfindung betrifft ein Doppelkupplungsgetriebe eines Kraftfahrzeugs, mit einer als Hohlwelle ausgebildeten ersten Eingangswelle und einer längeren, koaxial innerhalb der ersten Eingangswelle angeordneten zweiten Eingangswelle, die jeweils über eine zugeordnete Eingangskonstante mit mindestens einer achsparallel zu den beiden Eingangswellen angeordneten Vorgelegewelle in Triebverbindung stehen.

Doppelkupplungsgetriebe sind seit längerem in unterschiedlichen Ausführungsformen bekannt. Abgesehen von Sonderbauarten ist allen Doppelkupplungsgetrieben gemeinsam, dass sie zwei Eingangswellen aufweisen, von denen die erste als eine kürzere Hohlwelle ausgebildet ist, und die zweite länger ausgebildet und koaxial innerhalb der ersten Eingangswelle angeordnet ist. Beide Eingangswellen sind über jeweils eine zugeordnete Reibungskupplung einer Doppelkupplungsanordnung mit der Triebwelle eines Antriebsmotors verbindbar.

Verschiedene Ausführungen von Doppelkupplungsgetrieben unterscheiden sich im Wesentlichen durch die Anzahl und die Anordnung der Vorgelegewellen sowie durch die Anordnung der Ausgangswelle voneinander. Weitere Unterscheidungsmerkmale von Doppelkupplungsgetrieben bestehen in der Art und der Anzahl der Triebverbindungen zwischen den Getriebewellen, die als Eingangskonstante, Ausgangskonstante oder schaltbare Übersetzungsstufen ausgebildet sein können.

Aus der DE 35 46 454 C2 ist beispielsweise ein Doppelkupplungsgetriebe mit einer als Hohlwelle ausgebildeten ersten Eingangswelle, einer längeren, koaxial innerhalb der ersten Eingangswelle angeordneten zweiten Eingangswelle, und einer achsparallel zu den beiden Eingangswellen angeordneten Vorgelegewelle bekannt. Die Vorgelegewelle bildet zugleich die Ausgangswelle des Doppelkupplungsgetriebes und weist hierzu an ihrem motorseitigen Ende ein Kegelritzel zum Antrieb eines Tellerrads eines Achsdifferenzials auf. Beide Eingangswellen sind über zugeordnete schaltbare Gangzahnradsätze, deren Festräder jeweils auf einer der Eingangswellen angeordnet sind, selektiv mit der Ausgangs- bzw. Vorgelegewelle verbindbar; die erste Eingangswelle über die Gangzahnradsätze der geraden Gänge (G2, G4) und die zweite Eingangswelle über die Gangzahnradsätze der ungeraden Gänge (G1, G3, G5) sowie des Rückwärtsgangs (R). Als Besonderheit weist das bekannte Doppelkupplungsgetriebe eine schaltbare Kupplung zur Kopplung beider Eingangswellen auf, wodurch beim Anfahren beide Reibungskupplungen gleichzeitig als Anfahrkupplungen genutzt werden können und eine unzulässig hohe Erwärmung einer einzigen Reibungskupplung vermieden wird.

In der DE 41 23 493 C2 ist dagegen ein Doppelkupplungsgetriebe mit einer als Hohlwelle ausgebildeten ersten Eingangswelle, einer längeren, koaxial innerhalb der ersten Eingangswelle angeordneten zweiten Eingangswelle, und einer achsparallel zu den beiden Eingangswellen angeordneten Vorgelegewelle beschrieben, bei dem die Ausgangswelle von einer weiteren Getriebewelle gebildet wird, die kolinear, d.h. koaxial und axial benachbart zu den beiden Eingangswellen angeordnet ist. Während die erste Eingangswelle über eine Eingangskonstante mit der Vorgelegewelle in Triebverbindung steht, ist die zweite Eingangswelle über zwei schaltbare Eingangs-Übersetzungsstufen, deren Festräder auf der zweiten Eingangswelle angeordnet sind, selektiv mit der Vorgelegewelle verbindbar. Abtriebsseitig ist die Vorgelegewelle über drei schaltbare Ausgangs-Übersetzungsstufen selektiv mit der Ausgangswelle verbindbar, die zur Schaltung eines Direktgangs auch unmittelbar mit der zweiten Eingangswelle koppelbar ist.

Ein weiteres Doppelkupplungsgetriebe mit einer als Hohlwelle ausgebildeten ersten Eingangswelle und einer längeren, koaxial innerhalb der ersten Eingangswelle angeordneten zweiten Eingangswelle ist aus der DE 101 53 014 A1 bekannt. Dieses Doppelkupplungsgetriebe weist zwei parallel zu den beiden Eingangswellen angeordnete Vorgelegewellen auf, die zusammen mit den beiden Eingangswellen V-förmig angeordnet sind und jeweils über ein Abtriebsfestrad mit einem gemeinsamen Abtriebselement in Verbindung stehen. Zur Schaltung der ungeraden Gänge (G1, G3, G5) ist die zweite Eingangswelle über schaltbare Gangzahnradsätze selektiv mit der ersten Vorgelegewelle und der zweiten Vorgelegewelle verbindbar. Zur Schaltung der geraden Gänge (G2, G4, G6) und des Rückwärtsgangs (R) ist die erste Eingangswelle über schaltbare Gangzahnradsätze selektiv mit der ersten Vorgelegewelle und der zweiten Vorgelegewelle verbindbar. Die Festräder der Gangzahnradsätze sind jeweils auf der zugeordneten Eingangswelle angeordnet.

Aus Dokument EP 2 128 495 A1 ist ein Doppelkupplungsgetriebe mit dem Merkmalen des Oberbegriffs von Anspruch 1 bekannt.

Bei in Vorgelegebauweise ausgeführten Schaltgetrieben wie auch bei Doppelkupplungsgetrieben kann der radiale Abstand zwischen den Eingangswellen und den Vorgelegewellen von dem idealen Wert in der Größenordnung von einigen Zehntel Millimetern abweichen. Des Weiteren führt eine lastbedingte Durchbiegung der lastführenden Eingangs- und Vorgelegewellen zu weiteren Abweichungen von dem idealen radialen Abstand. Derartige Abweichungen können an den Zahnrädern der nicht lastführenden Eingangskonstanten und der schaltbaren Übersetzungsstufen zu Verklemmungen und demzufolge zu einem verringerten Getriebewirkungsgrad sowie zu einen erhöhtem Verschleiß führen. Während Verklemmungen an den schaltbaren Übersetzungsstufen üblicherweise durch ein erhöhtes Axialspiel der Radiallager, über welche die Losräder auf der betreffenden Getriebewelle drehbar gelagert sind, vermieden werden können, ist eine geeignete Maßnahme an drehfest auf einer Eingangswelle angeordneten Festrädern des Getriebes hierzu bislang unbekannt.

Der Erfindung liegt daher die Aufgabe zugrunde, ein Doppelkupplungsgetriebe der eingangs genannten Art vorzuschlagen, bei dem eine Verklemmung der Zahnräder der nicht lastführenden Eingangskonstanten durch eine technisch einfache und kostengünstige Konstruktion verhindert werden kann.

Diese Aufgabe ist in Verbindung mit den Merkmalen des Oberbegriffs des Hauptanspruchs erfindungsgemäß dadurch gelöst, dass bei mindestens einer der Eingangskonstanten das auf der zugeordneten Eingangswelle angeordnete Festrad über eine erste Mitnahmeverzahnung drehfest auf einer Traghülse angeordnet ist, die ihrerseits über eine zweite Mitnahmeverzahnung drehfest mit der betreffenden Eingangswelle verbunden ist.

Derartige axial ausgerichtete Mitnahmeverzahnungen weisen ohne besondere Maßnahmen ein gewisses Radialspiel auf. Durch die Verwendung der Traghülse und deren drehfesten Verbindung mit dem Festrad sowie der Eingangswelle über jeweils eine Mitnahmeverzahnung steht somit ohne besondere Maßnahmen ein Radialspiel zur Verfügung, das eine begrenzte radiale Verschiebung und ein begrenztes Verkippen des Festrades gegenüber der zugeordneten Eingangswelle ermöglicht. Des Weiteren wird durch die steckbare Verbindung des Festrades und der Traghülse auf der zugeordneten Eingangswelle die Montage des Doppelkupplungsgetriebes erleichtert.

Zur Sicherstellung einer hinreichenden Stabilität der Verbindung des Festrades mit der Eingangswelle ist vorgesehen, dass die Traghülse und die zugeordnete Eingangswelle jeweils in einem zahnradnahen Axialbereich mit einem Verzahnungsabschnitt der zweiten Mitnahmeverzahnung und in einem zahnradfernen Axialbereich mit einem glatten Führungsabschnitt versehen sind.

Vorteilhafte Ausgestaltungen und Weiterbildungen des erfindungsgemäßen Doppelkupplungsgetriebes sind Gegenstand der Unteransprüche.

Gemäß einer bevorzugten Ausführungsform ist vorgesehen, dass bei der getriebeinneren Eingangskonstante das auf der zugeordneten Eingangswelle angeordnete Festrad über eine erste Mitnahmeverzahnung drehfest auf einer Traghülse angeordnet ist, die ihrerseits über eine zweite Mitnahmeverzahnung drehfest mit der betreffenden Eingangswelle verbunden ist.

Falls das normale Radialspiel der Mitnahmeverzahnungen zur Vermeidung einer Verklemmung der Zahnräder nicht ausreicht, können die erste Mitnahmeverzahnung und/oder die zweite Mitnahmeverzahnung abweichend von der üblicherweise genutzten DIN-Norm auch mit einem erhöhten Radialspiel ausgeführt sein.

Eine weitere konstruktive Maßnahme, um insbesondere ein Verkippen des antriebsseitigen Festrades zu ermöglichen, besteht darin, die erste Mitnahmeverzahnung und/oder die zweite Mitnahmeverzahnung nach Art einer Bogenzahnkupplung axial konvex bogenförmig auszuführen. Hierdurch kann sich das eingangswellenseitige Festrad bei einer Durchbiegung der zugeordneten Vorgelegewelle der Neigung des vorgelegewellenseitigen Festrades anpassen, wodurch ein Verklemmen beider Zahnräder verhindert wird.

Falls die vorbeschriebenen Ausführungsvarianten, z.B. aus Bauraum- und Montagegründen, nur bei einer Eingangskonstanten, vorzugsweise der getriebeinneren Eingangskonstanten, zur Anwendung kommen, so kann ein Verklemmen der Zahnräder der anderen, vorzugsweise der getriebeäußeren Eingangskonstanten dadurch verhindert werden, dass die Zahnräder dieser Eingangskonstanten mit einem erhöhten Zahnflankenspiel ausgeführt sind.

Die erfindungsgemäße Ausbildung der Eingangskonstanten ist grundsätzlich bei allen Doppelkupplungsgetrieben mit den eingangs genannten Merkmalen einsetzbar. Besonders geeignet ist die erfindungsgemäße Ausführung der Eingangskonstanten jedoch bei einem Doppelkupplungsgetriebe, bei dem die beiden Eingangswellen über die zugeordneten Eingangskonstanten mit mindestens einer gemeinsamen Vorgelegewelle in Triebverbindung stehen, die über mehrere schaltbare Ausgangs-Übersetzungsstufen mit einer Ausgangswelle verbindbar ist, die kolinear zu den beiden Eingangswellen angeordnet und über eine Axiallageranordnung gegenüber der zweiten Eingangswelle axial gelagert ist. Bei dieser Ausführung eines Doppelkupplungsgetriebes sind die eingangsseitigen inneren Festräder der Eingangskonstanten praktisch zwischen den zugeordneten Festrädern der Vorgelegewellen eingespannt, so dass ein Radialausgleich der inneren Festräder hier besonders wichtig ist.

Ein derartiges Doppelkupplungsgetriebe ist gemäß der Erfindung aus einem in Vorgelegebauweise ausgeführten Gruppengetriebe mit einem Hauptgetriebe und einer diesem vorgeschalteten Splitgruppe ableitbar, indem die Splitgruppe und die einfache Reibungskupplung durch zwei koaxiale Eingangswellen mit jeweils einer Eingangskonstanten und eine Doppelkupplungsanordnung ersetzt werden. Abweichend von den bislang bekannten Doppelkupplungsgetrieben kann bei diesem Doppelkupplungsgetriebe nur jede zweite Schaltung, nämlich diejenigen, bei denen die Schaltstellung der lastführenden Schaltkupplung der betreffenden Ausgangs-Übersetzungsstufe beibehalten und durch ein überschnittenes Öffnen der einen Reibungskupplung sowie ein Schließen der anderen Reibungskupplung nur die lastführende Eingangswelle gewechselt wird, als Lastschaltung, d.h. ohne Zugkraftunterbrechung, durchgeführt werden. Auf diese Weise wird die Funktion der Synchronisierung, welche bei herkömmlichen Getrieben in der vorgeschalteten Splitgruppe von aufwändigen Synchronisiereinrichtungen übernommen wird, in die lastschaltbare Doppelkupplung integriert. Dadurch ist es möglich, den axialen Bauraum der Splitgruppe vorteilhaft zu reduzieren, indem die Zahnräder der beiden Eingangskonstanten näher beieinander angeordnet werden, wobei sie zumindest teilweise den Bauraum der sonst eingesetzten Synchronisiereinrichtung einnehmen. Um bei einer solchen, verkürzten Radsatzausführung die notwendige Übertragungssicherheit der beiden Eingangskonstantenzahnräder auf der Vorgelegewelle zu garantieren, können diese beispielsweise mit der Vorgelegewelle verschweißt werden.

Wird dagegen trotz fehlender Synchronisiereinrichtung die Anordnung im Bezug auf die axiale Position der Konstantenzahnräder beibehalten, so hat dies den Vorteil, dass weitere Bauteile, wie beispielsweise die Vorgelegewellen mit ihren Eingangskonstantenrädern als Gleichteile verwendet werden können, sowohl für erfindungsgemäße Doppelkupplungsgetriebe, als auch für herkömmliche, nicht lastschaltbare Schaltgetriebe mit zwei Eingangskonstanten.

Zur Verdeutlichung der Erfindung ist der Beschreibung eine Zeichnung mit einem Ausführungsbeispiel beigefügt. In dieser zeigt
- Fig. 1: einen vergrößerten Ausschnitt des Doppelkupplungsgetriebes der Fig. 2 mit einer ersten Ausführungsform einer Eingangskonstante,
- Fig. 2: ein Doppelkupplungsgetriebe in einem Längsmittelschnitt, und
- Fig. 3: eine schematische Abbildung des Doppelkupplungsgetriebes gemäß Fig. 2.

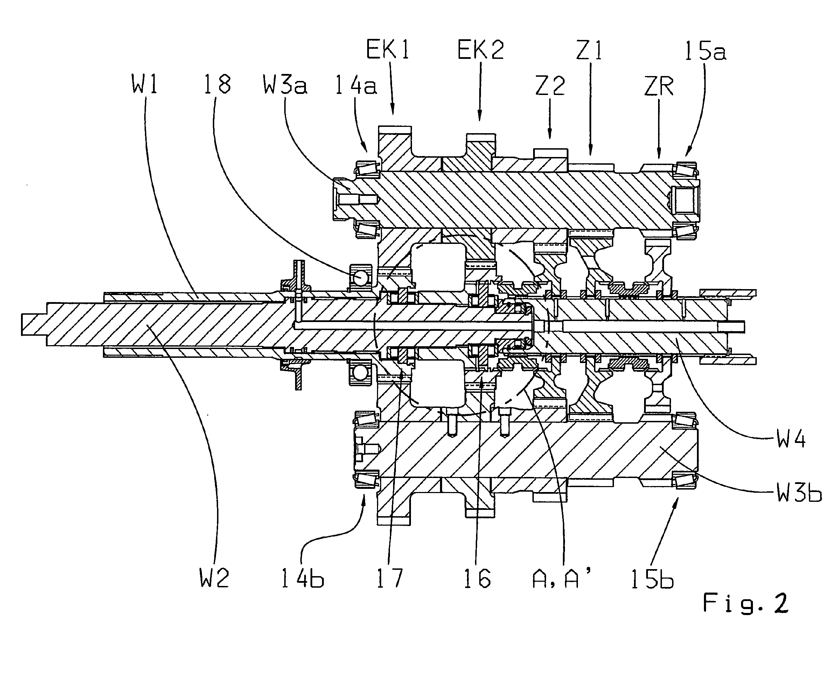

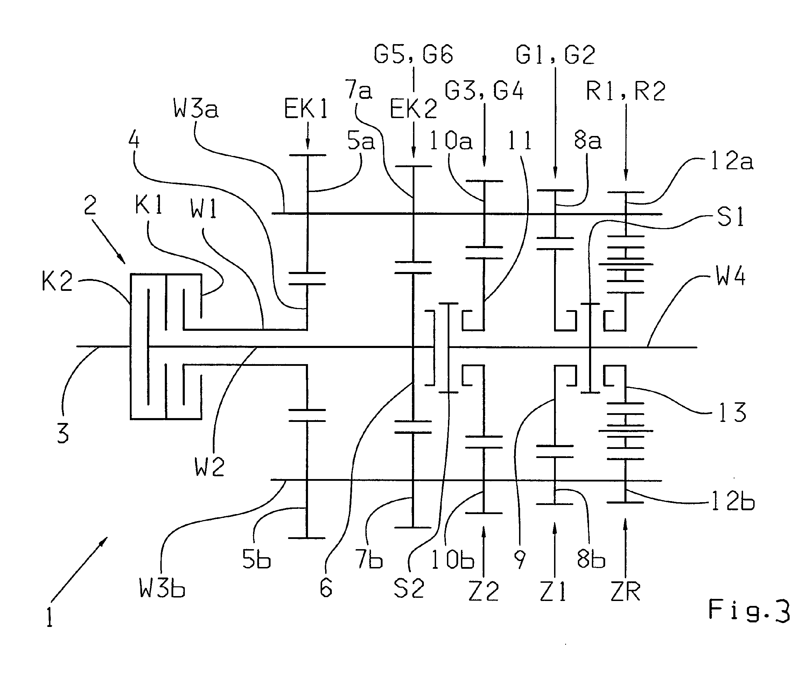

Ein in Fig. 2 in einem Längsmittelschnitt abgebildetes Doppelkupplungsgetriebe 1, dessen prinzipieller Aufbau zur Verdeutlichung auch in der schematischen Ansicht von Fig. 3 dargestellt ist, umfasst zwei Eingangswellen W1, W2, zwei Vorgelegewellen W3a, W3b und eine Ausgangswelle W4. Die kürzere erste Eingangswelle W1 ist als Hohlwelle ausgebildet und antriebsseitig über eine erste Reibungskupplung K1 einer Doppelkupplungsanordnung 2 mit der Triebwelle 3 eines nicht näher dargestellten Antriebsmotors verbindbar. Die längere zweite Eingangswelle W2 ist koaxial innerhalb der ersten Eingangswelle W1 angeordnet und antriebsseitig über eine zweite Reibungskupplung K2 der Doppelkupplungsanordnung 2 mit der Triebwelle 3 des Antriebsmotors verbindbar. Die beiden Vorgelegewellen W3a, W3b weisen identische, als Festräder 5a, 5b; 7a, 7b; 8a, 8b; 10a, 10b; 12a, 12b ausgebildete Zahnräder auf und sind bezüglich der gemeinsamen Drehachse der beiden Eingangswellen W1, W2 in gleichem Abstand diagonal einander gegenüberliegend angeordnet.

Die erste Eingangswelle W1 steht über eine erste Eingangskonstante EK1 mit höherer Übersetzung mit den beiden Vorgelegewellen W3a, W3b in Triebverbindung, wobei zum Antrieb beider Vorgelegewellen W3a, W3b ein gemeinsames Festrad 4 der ersten Eingangswelle W1 genutzt wird. Auf die gleiche Weise steht die zweite Eingangswelle W2 über eine zweite Eingangskonstante EK2 mit niedrigerer Übersetzung mit den beiden Vorgelegewellen W3a, W3b in Triebverbindung, wobei zum Antrieb beider Vorgelegewellen W3a, W3b ein gemeinsames Festrad 6 der zweiten Eingangswelle W2 genutzt wird.

Die Ausgangswelle W4 ist kolinear, d.h. koaxial und axial benachbart, zu den Eingangswellen W1, W2, insbesondere axial angrenzend an die längere zweite Eingangswelle W2 angeordnet. Über drei Ausgangs-Zahnradsätze Z1, Z2 und ZR mit einem Wende-Zahnradsatz ZR, die jeweils ein Festrad 8a, 8b; 10a, 10b; 12a, 12b jeder Vorgelegewelle W3a, W3b und ein auf der Ausgangswelle W4 drehbar gelagertes Losrad 9, 11, 13 umfassen, ist die Ausgangswelle W4 mittels zugeordneter Schaltkupplungen mit den beiden Vorgelegewellen W3a, W3b verbindbar.

Die beiden Schaltkupplungen für den Wende-Zahnradsatz ZR und den ersten Vorwärts-Zahnradsatz Z1 (mit hoher Übersetzung) sind in einem ersten Schaltpaket S1 zusammengefasst. Ebenso sind die Schaltkupplung für den zweiten Vorwärts-Zahnradsatz Z2 (mit mittlerer Übersetzung) und eine Direktschaltkupplung zur unmittelbaren Verbindung der zweiten Eingangswelle W2 mit der Ausgangswelle W4 in einem zweiten Schaltpaket S2 zusammengefasst. Entsprechend sind insgesamt sechs Vorwärtsgänge G1 - G6 und zwei Rückwärtsgänge R1, R2 schaltbar, wobei der Kraftfluss bei dem jeweils niedrigeren Gang G1, G3, G5, R1 über die erste Reibungskupplung K1 sowie die erste Eingangswelle W1 und bei dem jeweils höheren Gang G2, G4, G6, R2 über die zweite Reibungskupplung K2 und die zweite Eingangswelle W2 erfolgt.

Bei diesem Doppelkupplungsgetriebe 1, das aus einem bekannten Gruppengetriebe der AS-Tronic-Baureihe von der ZF Friedrichhafen AG durch den Ersatz der bei diesem vorhandenen Splitgruppe (Vorschaltgruppe) sowie der einfachen Reibungskupplung durch die beiden Eingangswellen W1, W2, die Doppelkupplungsanordnung 2 und die Eingangskonstanten EK1, EK2 abgeleitet ist, kann nur jede zweite Schaltung, nämlich diejenigen ohne einen Wechsel der lastführenden Schaltkupplung (S1, S2), als Lastschaltung, d.h. ohne Zugkraftunterbrechung, durchgeführt werden.

Zur Erzielung eines getriebeinternen Axialkraftausgleichs sind die Zahnräder der beiden Eingangskonstanten EK1, EK2 und der drei Abtriebs-Übersetzungsstufen Z1, Z2, ZR mit geeigneter Neigung entgegengesetzt schrägverzahnt ausgeführt. Demzufolge findet zum einen innerhalb jeder der Vorgelegewellen W3a, W3b ein weitgehend vollständiger Axialkraftausgleich statt. Daher ist die Lagerung der Vorgelegewellen W3a, W3b in dem nicht näher dargestellten Getriebegehäuse, die jeweils als eine angestellte Lagerung aus zwei axial endseitig angeordneten und axial leicht gegeneinander verspannten Radial-Kegelrollenlagern 14a, 15a; 14b, 15b ausgebildet ist, weitgehend axialkraftfrei (Fig. 2).

Um auch einen weitgehenden Axialkraftausgleich innerhalb der zentral angeordneten Getriebewellen W1, W2, W4 zu erzielen, steht die zweite Eingangswelle W2 einerseits über eine aus der DE 196 33 279 A1 bekannte Axiallageranordnung 16 mit der Ausgangswelle W4 und andererseits über eine als zweireihiges Axial-Zylinderrollenlager ausgebildete Lageranordnung 17 mit der ersten Eingangswelle W1 in Verbindung. Durch diese Konstruktion wird unabhängig von der lastführenden Eingangswelle W1, W2 nur eine geringe resultierende Axialkraft über das an der ersten Eingangswelle W1 angeordnete, als Radial-Rillenkugellager ausgebildete Festlager 18 in das Getriebegehäuse eingeleitet.

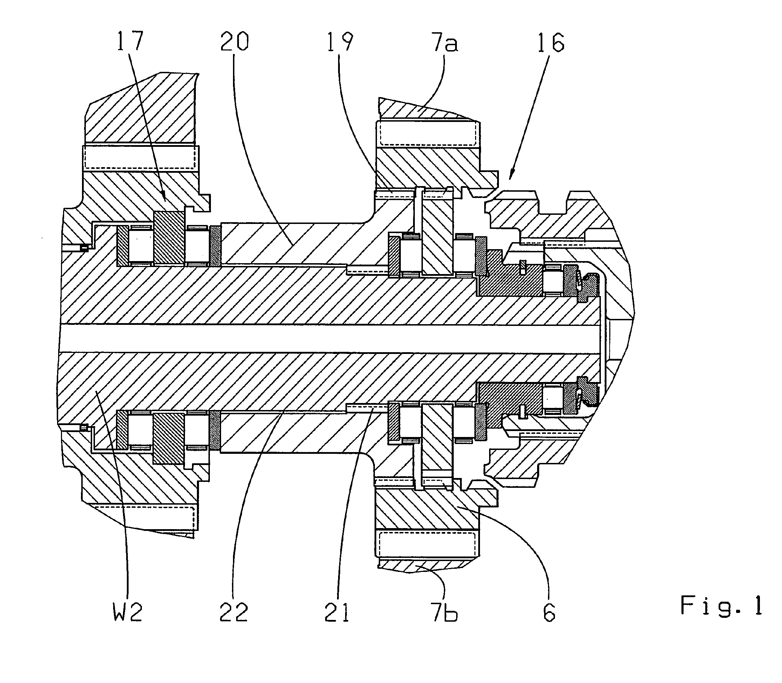

In dem in Fig. 1 abgebildeten vergrößerten Ausschnitt A der Fig. 2 ist genauer erkennbar, dass das auf der zweiten Eingangswelle W2 angeordnete Festrad 6 der zweiten Eingangskonstanten EK2 über eine erste Mitnahmeverzahnung 19 drehfest auf einer Traghülse 20 befestigt ist, die ihrerseits über eine zweite Mitnahmeverzahnung 21 drehfest mit der zweiten Eingangswelle W2 verbunden ist. Die zweite Mitnahmeverzahnung 21 ist in der Traghülse 20 und auf der zweiten Eingangswelle W2 nur in einem zahnradnahen Axialbereich ausgeführt. In einem axial benachbarten zahnradfernen Axialbereich sind die Traghülse 20 und die zweite Eingangswelle W2 mit einem glatten Führungsabschnitt 22 versehen. An dem freien axialen Ende der Traghülse 20 liegt eine Laufscheibe des zweireihigen Axial-Zylinderrollenlagers der Lageranordnung 17 flächenbündig an.

Durch die Verwendung der Traghülse 20 und deren drehfesten Verbindung mit dem Festrad 6 sowie der zweiten Eingangswelle W2 über jeweils eine Mitnahmeverzahnung 19, 21, wird eine begrenzte radiale Verschiebung und ein begrenztes Verkippen des Festrades 6 gegenüber der zweiten Eingangswelle W2 ermöglicht, so dass ein Verklemmen dieses Festrades 6 mit den zugeordneten Festrädern 7a, 7b der Vorgelegewellen W3a, W3b weitgehend ausgeschlossen ist. Des Weiteren wird durch die steckbare Verbindung des Festrades 6 und der Traghülse 20 auf der zweiten Eingangswelle W2 die Montage des Doppelkupplungsgetriebes 1 erleichtert.

### Bezugszeichen

- 1: Doppelkupplungsgetriebe
- 2: Doppelkupplungsanordnung
- 3: Triebwelle
- 4: Festrad von EK1
- 5a, 5b: Festrad von EK1
- 6: Festrad von EK2
- 7a, 7b: Festrad von EK2
- 8a, 8b: Festrad von Z1
- 9: Losrad von Z1
- 10a, 10b: Festrad von Z2
- 11: Losrad von Z2
- 12a, 12b: Festrad von ZR
- 13: Losrad von ZR
- 14a, 14b: Radial-Kegelrollenlager
- 15a, 15b: Radial-Kegelrollenlager
- 16: Axiallageranordnung
- 17: Lageranordnung
- 18: Festlager
- 19: Erste Mitnahmeverzahnung
- 20: Traghülse
- 21: Zweite Mitnahmeverzahnung
- 22: Führungsabschnitt
- A, A': Vergrößerter Ausschnitt
- EK1: Erste Eingangskonstante
- EK2: Zweite Eingangskonstante
- G1 - G6: Vorwärts-Gänge
- K1: Erste Reibungskupplung
- K2: Zweite Reibungskupplung
- R1, R2: Rückwärtsgang
- ZR: Wende-Zahnradsatz
- Z1, Z2: Ausgangs-Zahnradsatz
- W1: Erste Eingangswelle
- W2: Zweite Eingangswelle
- W3a, W3b: Vorgelegewelle
- W4: Ausgangswelle

## Patentansprüche

1. Doppelkupplungsgetriebe eines Kraftfahrzeugs, mit einer als Hohlwelle ausgebildeten ersten Eingangswelle (W1) und einer längeren, koaxial innerhalb der ersten Eingangswelle (W1) angeordneten zweiten Eingangswelle (W2), die jeweils über eine zugeordnete Eingangskonstante (EK1, EK2) mit mindestens einer achsparallel zu den beiden Eingangswellen (W1, W2) angeordneten Vorgelegewelle (W3a, W3b) in Triebverbindung stehen, **dadurch gekennzeichnet, dass** bei mindestens einer der Eingangskonstanten ein auf der zugeordneten Eingangswelle (W2) angeordnetes Festrad (6) über eine erste Mitnahmeverzahnung (19) drehfest auf einer Traghülse (20) angeordnet ist, die ihrerseits über eine zweite Mitnahmeverzahnung (21, 21') drehfest mit der betreffenden Eingangswelle (W2) verbunden ist, und dass die Traghülse (20) und die zugeordnete Eingangswelle (W2) jeweils in einem zahnradnahen Axialbereich mit einem Verzahnungsabschnitt der zweiten Mitnahmeverzahnung (21) und in einem zahnradfernen Axialbereich mit einem glatten Führungsabschnitt (22) versehen sind.

2. Doppelkupplungsgetriebe nach Anspruch 1, **dadurch gekennzeichnet, dass** bei der getriebeinneren Eingangskonstante (EK2) das auf der zugeordneten Eingangswelle (W2) angeordnete Festrad (6) über die erste Mitnahmeverzahnung (19) drehfest auf der Traghülse (20) angeordnet ist, die ihrerseits über die zweite Mitnahmeverzahnung (21, 21') drehfest mit der betreffenden Eingangswelle (W2) verbunden ist.

3. Doppelkupplungsgetriebe nach einem der Ansprüche 1 oder 2, **dadurch gekennzeichnet, dass** die erste Mitnahmeverzahnung (19) und/oder die zweite Mitnahmeverzahnung (21, 21') mit einem erhöhten Radialspiel ausgeführt sind.

4. Doppelkupplungsgetriebe nach einem der Ansprüche 1 bis 3, **dadurch gekennzeichnet, dass** die erste Mitnahmeverzahnung (19) und/oder die zweite Mitnahmeverzahnung (21, 21') axial konvex bogenförmig ausgeführt sind.

5. Doppelkupplungsgetriebe nach einem der Ansprüche 1 bis 4, **dadurch gekennzeichnet, dass** die Zahnräder (4, 5a, 5b) der anderen Eingangskonstanten mit einem erhöhten Zahnflankenspiel ausgeführt sind.

6. Doppelkupplungsgetriebe nach Anspruch 5, **dadurch gekennzeichnet, dass** die Zahnräder (4, 5a, 5b) der getriebeäußeren Eingangskonstanten (EK1) mit einem erhöhten Zahnflankenspiel ausgeführt sind.

7. Doppelkupplungsgetriebe nach einem der Ansprüche 1 bis 6, **dadurch gekennzeichnet, dass** die beiden Eingangswellen (W1, W2) über die zugeordneten Eingangskonstanten (EK1, EK2) mit mindestens einer gemeinsamen Vorgelegewelle (W3a, W3b) in Triebverbindung stehen, die über mehrere schaltbare Ausgangs-Übersetzungsstufen (Z1, Z2, ZR) mit einer Ausgangswelle (W4) verbindbar ist, die kolinear zu den beiden Eingangswellen (W1, W2) angeordnet und über eine Axiallageranordnung (16) gegenüber der zweiten Eingangswelle (W2) axial gelagert ist.

## Claims

1. Double-clutch transmission of a motor vehicle, having a first input shaft (W1) which is embodied as a hollow shaft, and a longer second input shaft (W2) which is arranged coaxially within the first input shaft (W1), which first input shaft (W1) and second input shaft (W2) each have a drive connection, by means of an assigned input constant (EK1, EK2), to at least one layshaft (W3a, W3b) which is arranged axis-parallel with respect to the two input shafts (W1, W2), **characterized in that** in the case of at least one of the input constants a fixed wheel (6) which is arranged on the assigned input shaft (W2) is arranged in a rotationally fixed fashion on a supporting sleeve (20) via a first driving toothing arrangement (19), which supporting sleeve (20) is itself connected in a rotationally fixed fashion to the respective input shaft (W2) via a second driving toothing arrangement (21, 21'), and **in that** the supporting sleeve (20) and the assigned input shaft (W2) are each provided, in an axial region near to the gearwheel, with a toothing section of the second driving toothing arrangement (21), and in an axial region remote from the gearwheel with a smooth guide section (22).

2. Double-clutch transmission according to Claim 1, **characterized in that** in the case of the input constant (EK2) which is on the inside of the transmission the fixed wheel (6) which is arranged on the assigned input shaft (W2) is arranged in a rotationally fixed fashion on the supporting sleeve (20) via the first driving toothing arrangement (19), which supporting sleeve (20) is itself connected in a rotationally fixed fashion to the respective input shaft (W2) via the second driving toothing arrangement (21, 21').

3. Double-clutch transmission according to one of Claims 1 or 2, **characterized in that** the first driving toothing arrangement (19) and/or the second driving toothing arrangement (21, 21') are embodied with increased radial play.

4. Double-clutch transmission according to one of Claims 1 to 3, **characterized in that** the first driving toothing arrangement (19) and/or the second driving toothing arrangement (21, 21') are embodied in an axially convex arcuate shape.

5. Double-clutch transmission according to one of Claims 1 to 4, **characterized in that** the gearwheels (4, 5a, 5b) of the other input constants are embodied with increased tooth edge play.

6. Double-clutch transmission according to Claim 5, **characterized in that** the gearwheels (4, 5a, 5b) of the input constants (EK1, EK2) on the outside of the transmission are embodied with increased tooth edge play.

7. Double-clutch transmission according to one of Claims 1 to 6, **characterized in that** the two input shafts (W1, W2) have a drive connection, via the assigned input constants (EK1, EK2), to at least one common layshaft (W3a, W3b), which can be connected via a plurality of shiftable output transmission stages (Z1, Z2, ZR) to an output shaft (W4) which is arranged collinearly with respect to the two input shafts (W1, W2) and is mounted axially with respect to the second input shaft (W2) by means of an axial bearing arrangement (16).

## Revendications

1. Boîte de vitesses à double embrayage d'un véhicule automobile, avec un premier arbre d'entrée (W1) réalisé sous la forme d'un arbre creux et avec un deuxième arbre d'entrée (W2) plus long disposé dans le plan coaxial à l'intérieur du premier arbre d'entrée (W1), lesdits arbres se trouvant respectivement en liaison d'impulsion, via une constante d'entrée (EK1, EK2) associée, avec au moins un arbre de renvoi (W3a, W3b) disposé parallèlement à l'axe des deux arbres d'entrée (W1, W2), **caractérisée en ce que** pour au moins une des constantes d'entrée, une roue fixe (6) disposée sur l'arbre d'entrée (W2) associé est disposée, via un premier endentement d'engrenage (19), solidairement en rotation sur une douille portante (20) reliée pour sa part, via un deuxième endentement d'engrenage (21, 21'), solidairement en rotation à l'arbre d'entrée (W2) concerné et que la douille portante (20) et l'arbre d'entrée (W2) associé sont respectivement pourvus, dans une zone axiale située à proximité de la roue dentée, d'une section d'endentement du deuxième endentement d'engrenage (21) et, dans une zone axiale située à une certaine distance de la roue dentée, d'une section de guidage (22) plate.

2. Boîte de vitesses à double embrayage selon la revendication 1, **caractérisée en ce qu'**en cas de constante d'entrée interne à la boîte de vitesses (EK2), la roue fixe (6) disposée sur l'arbre d'entrée (W2) associé est disposée solidairement en rotation sur la douille portante (20) via le premier endentement d'engrenage (19), ladite douille étant pour sa part reliée solidairement en rotation, via le deuxième endentement d'engrenage (21, 21'), à l'arbre d'entrée (W2) concerné.

3. Boîte de vitesses à double embrayage selon l'une quelconque des revendications 1 ou 2, **caractérisée en ce que** le premier endentement d'engrenage (19) et/ou le deuxième endentement d'engrenage (21, 21') sont réalisés avec un jeu radial accru.

4. Boîte de vitesses à double embrayage selon l'une quelconque des revendications 1 à 3, **caractérisée en ce que** le premier endentement d'engrenage (19) et/ou le deuxième endentement d'engrenage (21, 21') prennent une forme arquée convexe dans le plan axial.

5. Boîte de vitesses à double embrayage selon l'une quelconque des revendications 1 à 4, **caractérisée en ce que** les roues dentées (4, 5a, 5b) des autres constantes d'entrée sont réalisées avec un jeu de flanc de dent accru.

6. Boîte de vitesses à double embrayage selon la revendication 5, **caractérisée en ce que** les roues dentées (4, 5a, 5b) des constantes d'entrée (EK1) externes à la boîte de vitesses sont réalisées avec un jeu de flanc de dent accru.

7. Boîte de vitesses à double embrayage selon l'une quelconque des revendications 1 à 6, **caractérisée en ce que** les deux arbres d'entrée (W1, W2) sont en liaison d'impulsion, via les constantes d'entrée (EK1, EK2) associées, avec au moins un arbre de renvoi (W3a, W3b) commun pouvant être relié, via plusieurs étages de démultiplication de sortie (Z1, Z2, ZR) commutables, à un arbre de sortie (W4) disposé de façon colinéaire par rapport aux deux arbres d'entrée (W1, W2) et disposé, via un agencement de palier axial (16), dans le plan axial par rapport au deuxième arbre d'entrée (W2).
